# EUROPÄISCHE PATENTANMELDUNG

(11) **EP 0 978 358 A2**
(43) Veröffentlichungstag der Anmeldung: **09.02.2000**
(21) Anmeldenummer: 99115300.8
(22) Anmeldetag: 03.08.1999
(51) Int. Cl.: B26F 3/00, B26D 3/08, A21C 11/12

(54) **Verfahren und Vorrichtung zum Einbringen von Schnitten in Teiglinge oder andere Lebensmittel**

(30) Priorität: 05.08.1998 DE 19835319
(71) Anmelder: Kuchenmeister GmbH, 59494 Soest (DE)
(72) Erfinder: Trockels, Hans-Günter, 59494 Soest (DE)
(74) Vertreter: Patentanwälte Meinke, Dabringhaus und Partner

(57) **Zusammenfassung**

Mit einem Verfahren sowie einer Vorrichtung zur Einbringung von Schnitten in Teiglinge oder andere Lebensmittel, wobei die zu schneidenden Objekte, nachfolgend Teiglinge genannt, der Schnittstelle zugeführt, an der Schnittstelle geschnitten und nachfolgend geschnitten weiterbefördert werden, soll eine Lösung geschaffen werden, mit der die Teiglinge einschnitten bzw. eingeritzt, d.h. nicht durchtrennt, werden können, ohne daß Schneidelemente dabei verschleißen können, wobei gleichzeitig die Möglichkeit geschaffen werden soll, von geraden Schnitten abweichende Kurven in die zu bearbeitende Oberfläche einritzen zu können.

Dies wird verfahrensmäßig dadurch erreicht, daß der oder die Schnitte mittels eines Hochdruckwasserstrahles bis zu 1.000 bar eingebracht wird bzw. werden.

## Beschreibung

Die Erfindung richtet sich auf ein Verfahren zur Einbringung von Schnitten in Teiglinge oder andere Lebensmittel, wobei die zu schneidenden Objekte, nachfolgend Teiglinge genannt, der Schnittstelle zugeführt, an der Schnittstelle geschnitten und nachfolgend geschnitten weiterbefördert werden, sowie auf eine entsprechende Vorrichtung.

Es gibt eine Reihe von Bearbeitungsschritten bei der industriemäßigen Erzeugung von Lebensmitteln, die ein mechanisches Einwirken auf diese Lebensmittel nötig machen, wie beispielsweise das Einschneiden der Oberfläche von Teiglingen, aus denen nachfolgend Brötchen erzeugt werden. Wenn im folgenden lediglich von Teiglingen die Rede ist, so ist die Erfindung auf die Bearbeitung dieses Produktes nicht beschränkt, es können nach der erfindungsgemäßen Verfahrensweise und mit der erfindungsgemäßen Vorrichtung auch andere Lebensmittel geschnitten bzw. die Oberflächen eingeritzt werden, etwa Marzipan-Objekte, Käselaibe, Vorformen von Kuchen, Keksen od. dgl., wobei hier nachfolgend nur von Teiglingen die Rede ist.

Bei der Herstellung von Schnittbrötchen ist man um eine vergleichsweise große Automatisierung bemüht. Es gibt Geräte, die die Teiglinge vorformen und Geräte, die mechanisch in die Oberfläche einen Schnitt einbringen. Derartige Einrichtungen sind beispielsweise aus der DE-33 17 625-A1, der DE-33 20 114-A1 oder der DE-34 01 512-A1 bekannt, wobei hier automatisch Klingen durch die Oberfläche der Teiglinge gezogen werden, um diese um einen gewissen Betrag einzuritzen, damit die Teiglinge beim Weitergären auf dem Gärgutträger leicht aufreißen können, um dem Brötchen das typische geschnittene Aussehen zu verleihen.

Stellen die bekannten Anlagen schon eine deutliche Verbesserung gegenüber der reinen Handarbeit dar, so haben sie den Nachteil, daß beispielsweise Klingen abbrechen können, die sich dann in den Teiglingen wiederfinden. Hier müssen zusätzlich Metalldetektoren vorgesehen werden, um eine Verletzung beim Kunden zu vermeiden. Auch werden die Klingen unscharf und müssen daher von Zeit zu Zeit ausgewechselt werden u. dgl. mehr.

In Verbindung mit Lebensmitteln ist es auch schon bekannt, Flüssigkeitsschneidanlagen zu benutzen. Eine solche Schneidanlage ist beispielsweise in der EP-0 219 420-A2 beschrieben. Das Einritzen der Oberfläche eines Teiglinges mit Wasserstrahl zeigt auch die US-4 246 838, wobei das Ausschneiden zu Figuren, Bildern, Schriften etc. einer eßbaren, pastösen Grundmasse mittels CNC-gesteuerter Wasserstrahlschneidanlage in dem DK-295 09 298-U1 beschrieben ist.

Weisen diese Schneidanlagen den Vorteil auf, daß sie keine Klingen od. dgl. benutzen, die bei einer Beschädigung ggf. in Lebensmittel selbst verbleiben könnten und zur erheblichen Gefahr einer Verletzung führen, so benötigen sie, weil sie bei vergleichsweise niedrigem Druck arbeiten vergleichsweise viel Flüssigkeit, was auch dazu führt, daß je nach Art des Lebensmittels Schäden durch Überfeuchtung am Lebensmittel auftreten könen.

Aufgabe der Erfindung ist die Schaffung einer Lösung, mit der die Oberfläche derartigen Produkte eingeritzt werden kann, ggf. figürlich gestaltet werden kann, beschriftet werden kann u. dgl. mehr, unter Einsatz von sehr geringen Schneidflüssigkeitsmengen.

Mit einem Verfahren der eingangs bezeichneten Art wird diese Aufgabe gemäß der Erfindung dadurch gelöst, daß der oder die Schnitte mittels eines Hochdruckwasserstrahles bis zu 1.000 bar eingebracht wird bzw. werden. Die Düsengröße liegt dabei im Bereich von 0,05 bis 0,5 mm.

Die Verwendung eines Hochdruckwasserstrahles als Einritz- oder Einschneidgerät hat eine Reihe von Vorteilen. So ist bei Hochdruck ein sehr geringer Wasserverbrauch möglich, etwa weniger als 0,1 g Wasser je Schnitt von 5 cm Länge, was das Risiko von Schimmelbefall bei den geschnittenen Lebensmitteln minimiert. Die Hochdruckschneidtechnik ermöglicht sehr saubere und sehr viel exaktere Schnitte als die mechnische Schneidtechnik. Das Verfahren ist zwangsläufig hygienischer, auch findet kein mechanischer Verschleiß an den Werkzeugen statt, d.h. die oben beschriebene Gefahr durch Abbrechen von Teilen der Messer und der damit verbundenen Kontaminierung der geschnittenen Produkte ist nicht gegeben.

An dieser Stelle sei bemerkt, daß die Technologie des Wasserstrahlschneides bzw. -trennens seit langem in unterschiedlichen Gestaltungen bekannt ist. So ist es bekannt, mit Wasserstrahl Stapel von Stoffen zu schneiden, um die Zuschnitte zur Herstellung von Kleidungsstücken zu erzeugen. Es ist auch bekannt, Steine, Metalle, Kunststoffscheiben od. dgl. mit der Technologie des Wasserstrahlschneidens zu bearbeiten, wobei auch das reine Durchtrennen von Lebensmitteln mit einer Niederdruck-Wasserstrahltechnik bekannt ist.

Für die Erfindung ist entscheidend, daß hier lediglich die Oberfläche angeritzt wird bei gleichzeitig äußerst geringem Verbrauch von Wasser, wie oben schon erwähnt.

Ausgestaltungen der Erfindung ergeben sich aus den Unteransprüchen zum Verfahren. So kann vorgesehen sein, daß bei einer Reihe benachbarter Schneiddüsen in einen Teigling synchron eine Mehrzahl paralleler Schnitte eingebracht wird.

Je nach Art des Schnittes kann vorgesehen sein, die Teiglinge kontinuierlich unter den Schneiddüsen hindurchzuführen oder die Teiglinge unter den Schneiddüsen anzuhalten und mittels gesteuerter Schneiddüsen gerade, gekrümmte oder figürliche, konturenbildende Schnitte auszuführen und die Teiglinge nachfolgend weiterzubefördern.

Zur Lösung der obigen Aufgabe sieht die Erfindung auch eine Vorrichtung zur Einbringung von Schnitten in Teiglinge oder andere Lebensmittel, nachfolgend Teiglinge genannt, vor, insbesondere zur Durchführung des zuvor beschriebenen Verfahrens, wobei sich eine solche Vorrichtung dadurch auszeichnet, daß oberhalb einer Zuführstrecke für die zu schneidenden Teiglinge wenigstens eine Wasserstrahlschneiddüse angeordnet ist und eine Steuereinheit vorgesehen ist zur Steuerung der Wasserstrahlschneiddüse sowie einer Hochdruck-Wasserpumpe.

Weitere Ausgestaltungen der erfindungsgemäßen Vorrichtung ergeben sich aus den dem Vorrichtungsanspruch zugeordneten Vorrichtungsunteransprüchen, wobei insbesondere eine Mehrzahl von Schneiddüsen zur Einbringung mehrerer Schnitte in den Teigling vorgesehen sein können.

Mit einer erfindungsgemäßen Vorrichtung ist es möglich, figürliche Motive, wie Sterne, Halbmonde, ein Tannenbaum-Symbol, Konturen von Comic-Figuren od. dgl., in die Oberfläche eines Teiglinges einzubringen. Hierzu sieht die Erfindung eine entsprechende Steuerung der jeweiligen Wasserstrahlschneiddüse vor. Die Führung der Schneiddüsen kann über Lineareinheiten mit Servoantrieb erfolgen.

Da es sich um zu schneidende Lebensmittel handelt, bedarf es einer besonderen Behandlung des Schneidwassers, so daß die Vorrichtung auch mit einer entsprechenden Wasseraufbereitungsanlage versehen ist.

Hier sei bemerkt, daß zwar oben das Hochdruck-Wasserstrahlschneiden angesprochen ist, die Erfindung sieht aber auch vor, hier ein anderes Medium einzusetzen, etwa ein für den Menschen physiologisch verträgliches Öl, mit geringfügigen Mengen an Alkohol oder anderen Additiven, etwa mit Aromastoffen versehenes Wasser, Emulsionen aus Ölen und Wasser od. dgl.

Weitere Merkmale, Einzelheiten und Vorteile der Erfindung ergeben sich aufgrund der nachfolgenden Beschreibung sowie anhand der Zeichnung. Diese zeigt in unterschiedlichen Maßstäben in
- Fig. 1: eine Seitenansicht auf die Vorrichtung,
- Fig. 2: eine Seitenansicht gemäß Pfeil II in Fig. 1,
- Fig. 3: eine Aufsicht gemäß Pfeil III in Fig. 2 auf die Vorrichtung sowie in
- Fig. 4: ein möglicher Kurvenverlauf der die Schnitte einbringenden Düsen über die Teiglinge.

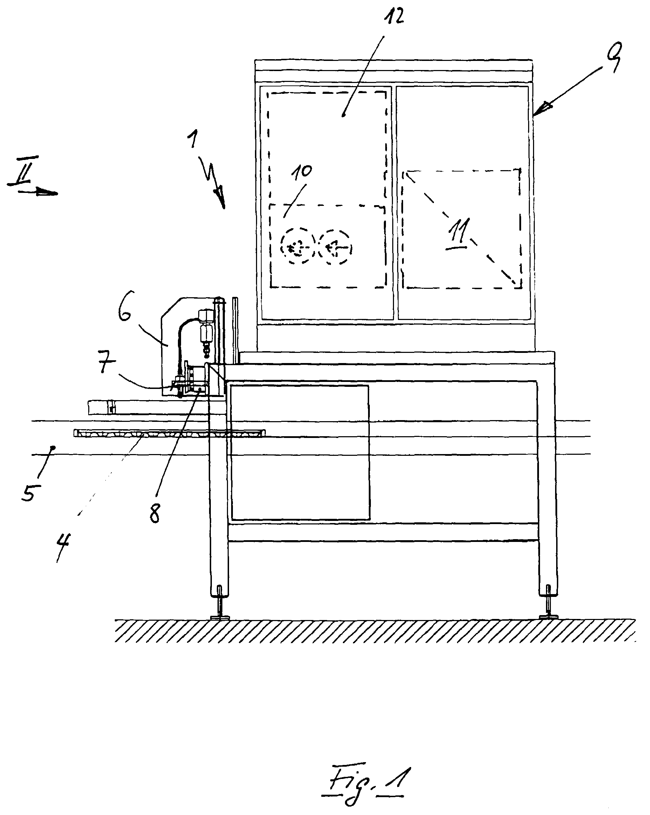

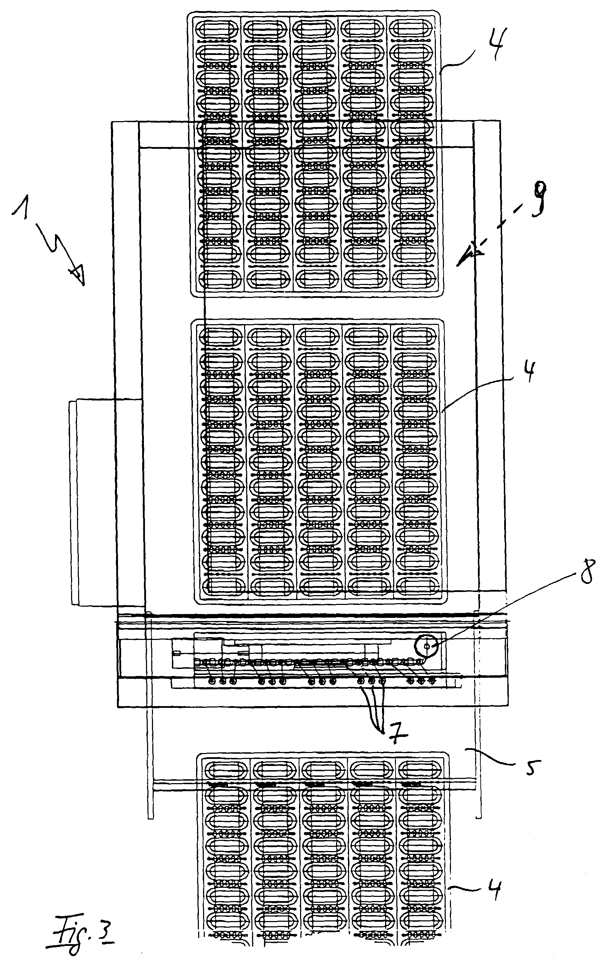

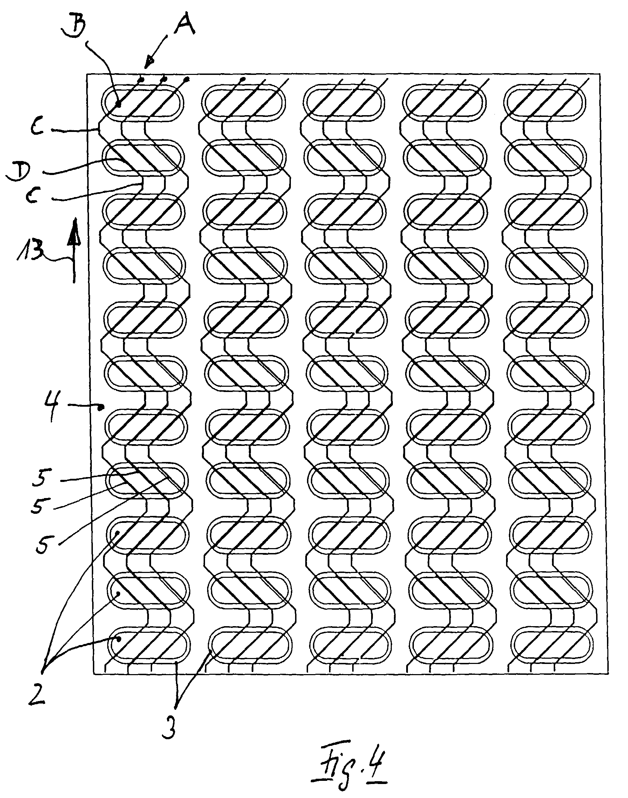

Die in den Fig. 1 bis 3 dargestellte, allgemein mit 1 bezeichnete Vorrichtung soll im dargestellten Beispiel der Fig. 4 in mit 2 bezeichnete Teiglinge, die in Mulden 3 auf Zuführblechen liegen, Oberflächenschnitte 5 einbringen.

Zum Einbringen dieser Oberflächenschitte 5 in die Teiglinge 2 werden die Förderbleche 4 auf einer in den Figuren nur andeutungsweise dargestellten Förderbahn 5 der Vorrichtung 1 zugeführt.

An einem bewegbaren Tragrahmen 6 sind eine Mehrzahl von Wasserstrahlschneiddüsen, im dargestellten Beispiel zu Dreiereinheiten zusammengefaßt, angeordnet, die über eine nicht näher dargestellte Druckwasserzufuhr 8 mit dem Schneidfluid beaufschlagbar sind. Neben Wasser kann es sich hier auch um andere Flüssigkeiten, etwa Öl od. dgl., handeln.

Die Wasserstrahlschneiddüsen 7 sind an ihrem Rahmen 6 und/oder am Tragbalken 8 über einen nicht näher dargestellten Antrieb, etwa eine Lineareinheit mit Servoantrieb, bewegbar geführt, wobei in einem hier nur andeutungsweise wiedergegebenen Schaltschrank 9, den hygienischen Anforderungen entsprechend abgedichtet, eine Hochdruck erzeugende Einrichtung 10 ebenso vorgesehen ist, wie die allgemein mit 11 bezeichnete Steuereinheit sowie ggf. eine Wasseraufbereitungseinrichtung 12.

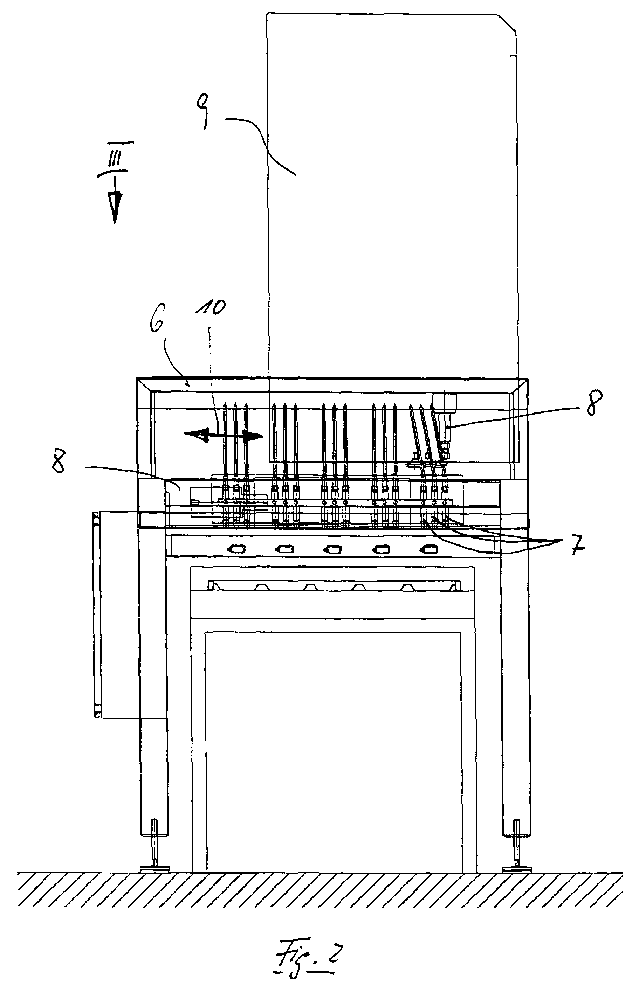

In Fig. 4 ist die Spur der Hochdruckwasserstrahle auf ein mit Teiglingen 2 belegtes Blech projiziert, wobei die Förderrichtung des Bleches 4 mit einem kleinen Pfeil 13 angedeutet ist. Bei Annähern des Bleches 4 setzt die Zufuhr von Hochdruckschneidfluid bei A ein, gleichzeitig werden die Schneiddüsen insgesamt nach links verfahren (Doppelpfeil 10, Fig. 2), so daß sie die Oberflächen der Teiglinge 2 schräg einritzen. Diese Strecke ist mit B bezeichnet. Nach einem kurzen Stillstand der Schneiddüsen, es entsteht die Strecke C, werden die Schneiddüsen nach rechts verfahren, so daß sich die Schneidstrecke D ergibt. Erneut folgt eine kurze Ruhe, woraus sich wiederum die Erzeugung der geraden Schneidstrecke C ergibt, wenn das Blech 4 weitergefördert wird.

Angedeutet ist in Fig. 4 noch, daß die Intensität der Schneidmittelzufuhr auf den Abschnitten B beispielsweise geringfügig stärker sein kann als im Ruhezustand, um zusätzlich Schneidfluid einzusparen, natürlich kann auch eine gleichmäßige Schneidmittelzufuhr vorgesehen sein.

Natürlich ist das beschriebene Ausführungsbeispiel der Erfindung noch in vielfacher Hinsicht abzuändern, ohne den Grundgedanken zu verlassen. So kann insbesondere bei Einbringung von Figuren auf den Lebensmitteloberflächen die Förderung des Bleches angehalten oder getaktet, d.h. nicht gleichmäßig vorgenommen werden u. dgl. mehr.

## Patentansprüche

1. Verfahren zur Einbringung von Schnitten in Teiglinge oder andere Lebensmittel, wobei die zu schneidenden Objekte, nachfolgend Teiglinge genannt, der Schnittstelle zugeführt, an der Schnittstelle geschnitten und nachfolgend geschnitten weiterbefördert werden,
dadurch gekennzeichnet,
daß der oder die Schnitte mittels eines Hochdruckwasserstrahles bis zu 1.000 bar eingebracht wird bzw. werden.

2. Verfahren nach Anspruch 1,
dadurch gekennzeichnet,
daß bei einer Reihe benachbarter Schneiddüsen in einen Teigling synchron eine Mehrzahl paralleler Schnitte eingebracht wird.

3. Verfahren nach ansprach 1 oder 2,
dadurch gekennzeichnet,
daß die Teiglinge kontinuierlich unter den Schneiddüsen hindurchgeführt werden.

4. Verfahren nach Anspruch 1 oder 2,
dadurch gekennzeichnet,
daß die Teiglinge unter den Schneiddüsen angehalten und mittels gesteuerter Schneiddüsen gerade, gekrümmte oder figürliche, konturenbildende Schnitte ausgeführt werden und die Teiglinge nachfolgend weitergefördert werden.

5. Vorrichtung (1) zur Einbringung von Schnitten (5) in Teiglinge (2) oder andere Lebensmittel, nachfolgend Teiglinge genannt, insbesondere zur Durchführung des Verfahrens nach Anspruch 1 bis 4,
dadurch gekennzeichnet,
daß oberhalb einer Zuführstrecke (5) für die zu schneidenden Teiglinge (2) wenigstens eine Wasserstrahlschneiddüse angeordnet ist und eine Steuereinheit vorgesehen ist zur Steuerung der Wasserstrahlschneiddüse (7) sowie einer Hochdruck-Wasserpumpe.

6. Vorrichtung nach Anspruch 5,
dadurch gekennzeichnet,
daß eine Mehrzahl von Schneiddüsen (7) zur Einbringung mehrerer Schnitte in den Teigling (2) vorgesehen ist.

7. Vorrichtung nach Anspruch 5 oder 6,
dadurch gekennzeichnet,
daß bei stehendem Teigling (2) die Wasserstrahlschneiddüse(n) (7) über eine rechnergesteuerte Steuerung (11) zum Einritzen von figürlichen Motiven in die Oberfläche des Teiglinges (2) geführt ist.

8. Vorrichtung nach Anspruch 7,
dadurch gekennzeichnet,
daß zur Führung der Schneiddüsen (7) Lineareinheiten mit Servoantrieb vorgesehen sind.

9. Vorrichtung nach Anspruch 5 oder einem der folgenden,
dadurch gekennzeichnet,
daß eine Wasseraufbereitungsanlage (12) zur Aufbereitung des Schneidwassers vorgesehen ist.
